# EUROPEAN PATENT APPLICATION

(11) **EP 3 767 072 A1**
(43) Date of publication of application: **20.01.2021**
(21) Application number: 19186321.6
(22) Date of filing: 15.07.2019
(51) Int. Cl.: F01D 5/14, B22F 3/105, B22F 5/00, B22F 5/04, F01D 9/04, F01D 25/24

(54) **ADDITIVELY MANUFACTURED ARTICLE COMPRISING SEGMENTS WITH DIFFERENT MICROSTRUCTURES AND METHOD FOR THE PRODUCTION THEREOF**

(71) Applicant: MTU Aero Engines AG, 80995 München (DE)
(72) Inventor: Maiwald-Immer, Tobias, 01219 Dresden (DE); Göhler, Thomas, 85221 Dachau (DE); Sowa, Roman, 37-203 Gniewczyna (PL); Luczyniec, Dawid, 22-500 Hrubieszów (PL); Seide, Annett, 85221 Dachau (DE); Rauscher, Sophie-Maria, 86368 Gersthofen (DE)

(57) **Abstract**

Disclosed is an article which has been produced by additive manufacturing from a metallic base material and comprises at least two segments or zones which differ with respect to their microstructures to result in at least one significantly different property of the at least two segments or zones. Also disclosed is a method of making a corresponding article.

## Description

### BACKGROUND OF THE INVENTION

### FIELD OF THE INVENTION

The present invention relates to an article, particularly a component of a turbomachine, which has been produced by additive manufacturing (AM) and comprises at least two segments or zones which differ with respect to their microstructures. The present invention also relates to a method for producing a corresponding article.

### PRIOR ART

Generative (additive) production methods such as, for example, stereolithographic methods, selective laser melting, selective laser sintering, electron beam melting, or laser deposition welding have in recent years found widespread use for the production of, for example, turbine parts, particularly parts for aircraft engines, in which such generative production methods are advantageous on account of the material used, for example. These methods are also used for so-called rapid tooling and rapid prototyping and for the mass production of products within the scope of rapid manufacturing.

Moreover, owing to the conditions of use and the requisite properties, it is advantageous in the case of components for turbomachines to use single-crystalline or directionally solidified components in order to specifically exploit the anisotropy of properties, such as, for example, different mechanical properties due to different crystal orientations. Thus, it is for example, known how to produce turbine blades or vanes from single-crystalline or directionally solidified nickel-based superalloys. Single-crystalline means that the component is formed from a single crystal, so that there are no grain boundaries. Although in the case of directionally solidified components many crystal grains are present in the component, these grains are nearly identical with respect to their crystal orientation and, in particular, are oriented in a preferred direction so as to exploit the special properties along the preferred direction.

However, while articles made by additive manufacturing offer several advantages, they usually have a uniform microstructure, i.e., (at least substantially) the same microstructure (e.g., monocrystalline, directionally solidified) throughout the entire article. This is not necessarily an advantage, especially in the case of articles having segments or zones which are subjected to different conditions during the use thereof. For example, the airfoil of a rotor blade of a gas turbine is in contact with very hot gases during use of the gas turbine, whereas the root of the rotor blade is not exposed to these hot gases but in contrast to the airfoil, must be able to withstand a high centrifugal force during rotation of the rotor disk into which the root is inserted.

### DISCLOSURE OF THE INVENTION

### OBJECT OF THE INVENTION

In view of the foregoing it is an object of the invention to provide an article and in particular, a component of a turbomachine which has been made by additive manufacturing and comprises at least two different segments or zones which are better adapted to the different conditions to which these segments or zones are subjected during use of the article than an article whose microstructure is the same throughout the article. It also is an object of the invention to provide a method for producing a corresponding article.

### TECHNICAL SOLUTION

The above objects are achieved by an article and a method with the features recited in the independent claims. Advantageous refinements are the subject matter of the dependent claims.

The (preferably three-dimensional) article of the present invention is produced by an additive manufacturing method from a metallic base material and comprises at least two segments or zones. The at least two segments or zones differ with respect to their microstructure to result in at least one significantly different property (in particular, mechanical property) thereof.

Examples of additive manufacturing methods include selective laser melting (SLM), selective laser sintering (SLS), electron beam melting (EBM), laser metal forming (LMF), laser engineered net shape (LENS) or direct metal deposition (DMD). Selective laser melting is preferred according to the present invention, but other methods can also be used. Depending on the method used the metallic base material is usually present in the form of a powder or a wire.

The metallic base material is usually a high-temperature alloy, for example a superalloy. Preferred superalloys are based on one or more of Ni, Co, Fe. However, other alloys such as, e.g., alloys based on Ti and Al can be used as well.

Examples of commercially available Ni-, Co- or Fe-based alloys which are suitable for making the article of the present invention include Waspaloy®, Hastelloy®, IN617®, IN718®., IN625®, Mar-M247®, IN100®, IN738®, 1N792®, Mar-M200®, B1900®, RENE 80®, Alloy 713®, Haynes 230®, Haynes 282®, FSX 414®, X-40®, X-45®, MAR-M 509®, MAR-M 302®, A 286®, Alloy 800 H®, N 155®, S 590®, Alloy 802®, Incoloy MA 956®, Incoloy MA 957® and PM 2000®. These alloys may, for example, contain finely dispersed metal oxides such as, e.g., Y₂O₃, Al₂O₃, ThO₂, HfO₂, or ZrO₂.

The at least one (preferably mechanical) property which is significantly different when at least two microstructurally different segments or zones of the article are compared may, for example, be one or more of the Youngs's modulus E, the yield strength or the tensile strength in at least one direction of the article but may also be, for example, the high temperature creep resistance and/or the fatigue resistance of the segment or zone. "Significantly different" as used herein preferably means that the property in a first segment or zone of the article is at least 5% higher or lower, e.g., at least 10%, at least 15%, at least 20% or at least 25% higher or lower, than the same property in a second segment or zone of the article.

The size of the segment or zone of the article is dependent on the article and the use thereof. Usually, a segment or zone of the article with uniform microstructure occupies at least 1%, e.g., at least 2%, at least 3%, at least 4%, at least 5%, at least 6%, at least 7%, at least 8%, at least 9%, at least 10%, at least 15%, at least 20%, at least 25%, at least 30%, at least 35% or at least 40%, of the total volume of the article. Of course, the number of segments or zones of the article may be more than two, e.g., three, four, five or even more. It further is to be understood that some of these zones may have an identical microstructure, as long as these zones are separated by at least one zone having a different microstructure.

The article of the invention may be a component of a turbomachine (e.g., of a gas turbine or of a compressor) but may also be any other article which can be made by an additive manufacturing method. Examples of components of a turbomachine include, but are not limited to, rotor blades, stator vanes, the housing of a turbine and parts thereof (e.g., a hook of the housing), as well as any other parts which are or may be subjected to mechanical and/or thermal stress during the operation of the turbomachine.

In one aspect of the article, the article may be a blade or vane of a turbomachine. For example, the airfoil of the blade or vane may have a microstructure which is different from the microstructure of the root of the blade or vane. In particular, the airfoil part and the root part of the blade or vane may differ in their microstructure so that the airfoil part of the blade or vane (which is exposed to very hot gases) has a significantly lower Young's modulus E (to reduce stress in the airfoil) than the root part thereof (to minimize elongation of the root due to centrifugal forces). Merely by way of example, the airfoil part of the blade or vane may have a Young's modulus E of from 150 to 170 GPa, whereas the Young's modulus E of the root part may be from 200 to 220 GPa.

It further is within the scope of the invention that even the airfoil of the blade itself comprises at least two segments or zones of different microstructure. For example, the leading edge of the airfoil may have a microstructure which is different from the microstructure of the remainder of the airfoil.

In another aspect of the article, a hook of the housing of a turbine may have a microstructure which is different from the microstructure of the body of the housing (and may, thereby have a higher thermal resistance than the housing body).

In another aspect of the article, the structure thereof may include cavities, especially designed cavities, i.e., empty spaces, in addition to the two or more zones of different microstructure. These cavities may act as built-in ACC (Aggregate Core Component) and at the same time allow to disperse projectile energy into a larger surface area (in Johnson-Cook regime), for example in the case of a blade off event where the article is the housing of a turbomachine. Alternatively or in addition it may be favourable to include pores that result from shrinkage of empty spaces due to solidification of incompletely fed material. Pores may be part of the microstructure zones, especially microstructure zones that are located at locations intentionally breaking after applying a predetermined force.

In another aspect of the article, segments or zones of different microstructure may alternate (e.g., according to a segment or zone (e.g., layer) structure A-B-A-B- ..., A-B-C-A-B-C- ...) and/or may form a sandwich structure (e.g., a segment or zone structure A-B-A). This may be of advantage for containing any damage to the housing of a turbomachine caused by e.g., a blade off event. It is, of course, also possible to combine the alternating and/or sandwich structures with one or more cavities in the structure.

In another aspect of the article according to the invention, at least one segment or zone of the article may have a monocrystalline microstructure and/or at least one segment or zone of the article may have a directionally solidified microstructure. It is to be appreciated here that even two zones which both have a monocrystalline microstructure or which both have a directionally solidified microstructure may be different if the orientations of the monocrystal or of the crystal grains inside the two segments or zones are different.

Further, if two segments or zones differ only with respect to the orientation of the monocrystal of the the crystal grains they may be separated by a zone in which the orientation of the monocrystal or crystal grains changes gradually from the orientation in the first segment or zone to the orientation in the second segment or zone.

The present invention further provides a method of changing the eigenfrequency of an article made by additive manufacturing from a metallic base material such as, e.g. the rotor blade of a turbomachine in order to, e.g., reduce the risk of a resonance disaster (e.g., in a case where two neighboring blades have the same eigenfrequency). According to the method, the eigenfrequency of the article is changed by including in the article at least one segment or zone whose microstructure is different from the microstructure of the remainder of the article or another segment or zone of the article. For example, due to the different microstructure the stiffness of the at least one segment or zone may be different from the stiffness of the remainder of the article (e.g. an airfoil).

The present invention further provides a method for manufacturing an article by additive manufacturing from a metallic base material. In this method the additive manufacturing is carried out in a way which results in at least two segments or zones of the article which differ in the microstructures thereof to result in at least one significantly different property of the at least two segments or zones.

In one aspect, the method may comprise ICME (Integrated Computational Materials Engineering).

Although the present invention has been described in detail on the basis of the exemplary embodiments, it is obvious to a person skilled in the art that the invention is not limited to these exemplary embodiments, but rather that modifications are possible in such a way that individual features can be omitted or different combinations of features can be implemented, without departing from the scope of protection of the accompanying claims. The disclosure of the present invention additionally includes all combinations of the individual features presented.

## Claims

1. Article produced by additive manufacturing from a metallic base material, **characterized in that** the article comprises at least two segments or zones which differ with respect to their microstructures to result in at least one significantly different property of the at least two segments or zones.

2. Article according to claim 1, **characterized in that** the article is a part of a turbomachine.

3. Article according to any one of claims 1 and 2, **characterized in that** the article is a blade or vane of a turbomachine.

4. Article according to claim 3, **characterized in that** the airfoil of the blade or vane has a microstructure which is different from the microstructure of the root of the blade or vane.

5. Article according to any one of claims 1 and 2, **characterized in that** the article is a housing of a turbomachine or a part thereof.

6. Article according to claim 5, **characterized in that** a hook of the housing has a microstructure which is different from the microstructure of the body of the housing.

7. Article according to any one of claims 1 to 6, **characterized in that** the structure of the article comprises cavities.

8. Article according to any one of claims 1 to 7, **characterized in that** the article comprises a first segment or zone having a first microstructure and at least one second segment or zone having a second microstructure which is different from the first microstructure and that the first and second segments or zones alternate and/or form a sandwich structure.

9. Article according to any one of claims 1 to 8, **characterized in that** the at least one significantly different property of the at least two segments or zones is the Young's modulus E, the yield strength, the tensile strength, the high temperature creep resistance and/or the fatigue resistance in at least one direction of the article.

10. Article according to any one of claims 1 to 9, **characterized in that** the metallic base material comprises or is an alloy, in particular a superalloy.

11. Article according to any one of claims 1 to 10, **characterized in that** the metallic base material is or comprises a Ni-base, Co-base or Fe-base superalloy.

12. Article according to any one of claims 1 to 11, **characterized in that** at least one segment or zone of the article has a monocrystalline microstructure and/or at least one segment or zone of the article has a directionally solidified microstructure.

13. Method of changing the eigenfrequency of an article made by additive manufacturing from a metallic base material, **characterized by** including in the article at least one segment or zone whose microstructure is different from the microstructure of the remainder of the article or another segment or zone.

14. Method for manufacturing an article by additive manufacturing from a metallic base material, **characterized in that** the additive manufacturing is carried out in a way which results in at least two segments or zones of the article which differ in the microstructures thereof to result in at least one significantly different property of the at least two segments or zones.

15. Method according to claim 14, **characterized in that** the method comprises ICME (Integrated Computational Materials Engineering).
